(19) Europäisches Patentamt
European Patent Office
Office européen des brevets

(11) Veröffentlichungsnummer: **0 035 669**
**A2**

(12) # EUROPÄISCHE PATENTANMELDUNG

(21) Anmeldenummer: **81101095.8**

(22) Anmeldetag: **17.02.81**

(51) Int. Cl.³: **C 08 L 33/06**
C 08 L 1/10, C 08 L 67/08
C 09 D 3/81, C 08 F 291/00

(30) Priorität: **01.03.80 DE 3007936**

(43) Veröffentlichungstag der Anmeldung:
**16.09.81 Patentblatt 81/37**

(84) Benannte Vertragsstaaten:
**AT DE FR GB IT NL SE**

(71) Anmelder: **BAYER AG**
**Zentralbereich Patente, Marken und Lizenzen**
**D-5090 Leverkusen 1, Bayerwerk(DE)**

(71) Anmelder: **Wolff Walsrode Aktiengesellschaft**
**Postfach**
**D-3030 Walsrode(DE)**

(72) Erfinder: **Huhn, Helmut, Dr.**
**Nordsunderberg 13**
**D-3030 Walsrode(DE)**

(72) Erfinder: **Karstens, Werner, grad. Ing.**
**Kirchstrasse 5**
**D-3036 Bomlitz 2(DE)**

(72) Erfinder: **Höhlein, Peter, Dr.**
**Windmuehlenweg 3e**
**D-4152 Kempen 3(DE)**

(72) Erfinder: **Traenckner, Hans-Joachim, Dr.**
**Wedelstrasse 46**
**D-4150 Krefeld 1(DE)**

(54) **Wässrige Dispersionen und Verfahren zu ihrer Herstellung.**

(57) Wäßrige Dispersionen enthaltend 20 - 50 Gew. -% Bindemittel auf Basis von Celluloseester, Poly(meth)acrylate und/oder Copolymerisate von (Meth)acrylaten und fettsäuremodifizierten Harzen werden hergestellt, indem man den Celluloseester in (Meth)acrylat und gegebenenfalls weiteren ungesättigten Monomeren löst, nach Zugabe von Emulgator und gegebenenfalls Weichmachern emulgiert und die Monomeren radikalisch polymerisiert, wobei das fettsäuremodifizierte Harz vor, während oder nach dieser Polymerisation zugegeben wird.

EP 0 035 669 A2

0035669

BAYER AKTIENGESELLSCHAFT 5090 Leverkusen, Bayerwerk
Zentralbereich
Patente, Marken und Lizenzen Str/m-c

# Wäßrige Dispersionen und Verfahren zu ihrer Herstellung

Die vorliegende Erfindung betrifft wäßrige Dispersionen von Bindemitteln auf Basis von Celluloseestern, Poly(meth)-acrylaten und/oder Copolymerisaten von (Meth)acrylaten und fettsäuremodifizierten Harzen und Verfahren zu deren Herstellung.

Wäßrige Polymerdispersionen werden im allgemeinen nach zwei Verfahren, der Polymerisation von Monomeren in wäßriger Phase bzw. der nachträglichen Dispergierung von geschmolzenen Polymeren, hergestellt.

In der DT-OS 25 29 547 wird ein verbessertes Verfahren zur Herstellung wäßriger Polymerdispersionen beschrieben, bei dem Wasser, ein oberflächenaktives Mittel, mindestens ein Polymeres und mindestens ein Monomeres in dem das Polymere löslich ist, zu einer Emulsion von Polymer-Monomer-Teilchen in Wasser vermischt und die Emulsion anschließend solchen Bedingungen unterworfen wird, daß das Monomere innerhalb der Teilchen radikalisch polymerisiert wird, wobei ein im wesentlichen homogenes Gemisch von mindestens 2 Polymeren innerhalb der Teilchen der Dispersion entsteht. Unter anderem werden nach

diesem Verfahren auch wäßrige Dispersionen von Nitrocellulose und Polyacrylaten erhalten. Diese sind aufgrund ihrer nicht trübungsfreien Auftrocknung und ihrer niedrigen Oberflächenhärte als Überzugsmaterial für z.B. Holz ungeeignet. Versucht man diese Nachteile durch Zugabe von Weichmachern zu beheben, so werden zwar die mechanischen Eigenschaften wie z.B. Oberflächenhärte etwas verbessert, aber die Beständigkeit gegen Alkohol ist nach wie vor ungenügend.

Überraschenderweise wurde nun gefunden, daß die Eigenschaften der Überzüge hinsichtlich Glanz, mechanischen Eigenschaften wie Oberflächenhärte neben ausgezeichneter Flexibilität, und Beständigkeit gegen Alkohol und Wasser entscheidend verbessert werden können, wenn fettsäuremodifizierte Harze der Polymeremulsion bzw. Polymerdispersion vor, während oder nach der radikalischen Polymerisation zugesetzt werden.

Gegenstand der Erfindung sind wäßrige Polymerdispersionen bestehend aus

a) 5 - 40, vorzugsweise 10 - 25 Gew.-% Poly(meth)acrylat und/oder Copolymerisaten des Poly(meth)acrylats,

b) 5 - 40, vorzugsweise 5 - 25 Gew.-% Celluloseestern,

c) 0 - 25, vorzugsweise 0 - 15 Gew.-% Weichmacher,

d) 0,5 - 10, vorzugsweise 1 - 5 Gew.-% Emulgator und

Wasser,

dadurch gekennzeichnet, daß die Polymerdispersion

e) 0,5 - 30, vorzugsweise 1,0 - 10 Gew.-% fettsäuremodifizierte Harze enthält und der Feststoffanteil der Polymerdispersion 20 - 60 Gew.-%, vorzugsweise 20 - 50 Gew.-%, bezogen auf die Gesamtdispersion beträgt und sich die Gew.-%-Angaben auf die Gesamtdispersion beziehen.

Ein weiterer Gegenstand der Erfindung sind Verfahren zur Herstellung der erfindungsgemäßen wäßrigen Polymerdispersionen, indem man die Celluloseester in (Meth)acrylaten und gegebenenfalls weiteren $\alpha$,ß-ungesättigten Monomeren und Lösungsmitteln löst, nach Zugabe von Emulgatoren und gegebenenfalls Weichmachern emulgiert und solchen Bedingungen unterwirft, daß der Monomeranteil in den emulgierten Teilchen radikalisch polymerisiert, dadurch gekennzeichnet, daß das fettsäuremodifizierte Harz vor, während oder nach der radikalischen Polymerisation zugesetzt wird.

Nach einer bevorzugten Ausführungsform wird das fettsäuremodifizierte Harz nach der Polymerisation zugesetzt.

Man kann den Celluloseester in einem bzw. einer Mischung von Monomeren lösen und das Gemisch in der wäßrigen Lösung des oberflächenaktiven Mittels emulgieren. Zur Emulgierung verwendet man vorzugsweise eine Schervorrichtung. Wenn die Beziehung zwischen der Lösungskonzentration und der Viskosität wegen einer zu hohen Viskosität keine angemessene Vorlösung gestattet, kann man

das Polymere und das Monomere direkt in dem das oberflächenaktive Mittel enthaltenden Wasser emulgieren und gleichzeitig die Auflösung des Polymeren im Monomeren erreichen, indem man Scherkräfte anwendet. Im allgemeinen bevorzugt man eine Schervorrichtung, um eine möglichst geringe Polymer-Monomer-Teilchengröße innerhalb kurzer Zeit zu erzielen; zuweilen genügt jedoch auch ein einfacher Blattrührer. Bei der Emulsion kann man gegebenenfalls Weichmacher und ein Lösungsmittel zusetzen.

Die Polymerisation des (der) Monomeren in den Polymer-Monomer-Teilchen kann entweder kontinuierlich oder diskontinuierlich unter Verwendung herkömmlicher Initiatoren, die wasserlöslich oder öllöslich sein können, vorgenommen werden. Man führt die Polymerisation vorzugsweise in einem anderen Gefäß als jenem durch, in dem die Emulsion erzeugt wurde. Auf diese Weise läßt sich die exotherme Reaktion besser unter Kontrolle halten.

Von besonderer Bedeutung für die Stabilität der Dispersion wie auch für ihr Verhalten bei der Filmbildung ist die Größe der dispergierten Teilchen. Erfindungsgemäß liegt sie bevorzugt im Bereich von 0,01 - 1,5µm, besonders bevorzugt beträgt die mittlere Teilchengröße um 0,3µm und ändert sich auch bei längerer Lagerung bei 5 - 50°C nicht wesentlich.

Celluloseester, die erfindungsgemäß verwendet werden können, sind insbesondere Celluloseacetat, Celluloseacetobutyrat, Celluloseacetatbenzoat und Cellulosesorbatacetat und Mischungen dieser Ester. Ganz besonders geeignet ist

Nitrocellulose, beispielsweise die üblichen Collodiumwolle-Qualitäten, d.h., Cellulosesalpetersäureester mit einem Stickstoffgehalt von 10,2 - 12,4 Gew.-%.

Als fettsäuremodifizierte Harze kommen vorzugsweise öl- oder fettsäuremodifizierte Alkydharze in Betracht. Unter Alkydharzen versteht man durch Polykondensation nach bekannten Verfahren aus Alkoholen und Carbonsäuren hergestellte Polyester der Art, wie sie z.B. in Ullmanns Enzyklopädie der Technischen Chemie definiert oder in D.H. Solomon, The Chemistry of Organic Filmformers, S. 75 - 101, beschrieben sind. Im allgemeinen enthalten die eingesetzten Alkohole 1 - 15, vorzugsweise 2 - 6 C-Atome, die verwendeten Säuren oder ihre esterbildenden Derivate 2 - 14, vorzugsweise 4 - 12 C-Atome. Diese Alkydharze können gegebenenfalls mit anderen z.B. auch ölfreien Polyestern, abgemischt werden.

Beipiele für geeignete Alkohole sind Pentaerythrit, Glycerin, Trimethylolpropan, Trimethylolethan, 1,2,4-Butantriol, 1,2,6-Hexantriol, Ethylenglykol, Propandiol-1,2, Propandiol-1,3, Butandiol-1,2, -1,3 und -1,4, Neopentylglykol, Diethylenglykol, Triethylenglykol, Dipropylenglykol, Hexandiol-1,6, 1,2- und 1,4-Bis-(hydroxymethyl)-cyclohexan, 2-Ethylpropandiol-1,3, 2-Ethylhexandiol-1,3, Cyclohexandiol-1,2, -1,4, Adipinsäurebisethylenglykolester, Benzylalkohol, Cyclohexanol und andere Monoalkohole mit 1 bis 6 C-Atomen. Bevorzugte Alkohole sind Glycerin, Trimethylolpropan, Neopentylglykol und Pentaerythrit.

Als Beispiele geeigneter Säurekomponenten seien folgende Carbonsäuren oder ihre esterbildenden Derivate genannt: Phthalsäure, Isophthalsäure, Terephthalsäure, Tetra- und Hexahydrophthalsäure, Endomethylentetrahydrophthalsäure, Bernsteinsäure, Adipinsäure, Sebacinsäure, Trimellitsäure, Benzoesäure und ihre Derivate wie z.B. p-tert.-Butylbenzoesäure, Hexahydrobenzoesäure. Am gebräuchlichsten ist Phthalsäure.

In den für die erfindungsgemäßen Überzugsdispersionen eingesetzten Alkydharzen kann der Ölanteil, berechnet als Triglycerid und bezogen auf das Alkydharz, 5 - 50 Gew.-% betragen. Die trocknenden oder nicht trocknenden Fettsäuren, die im allgemeinen 6 - 24 C-Atome enthalten, können entweder als solche oder in Form ihrer Glycerinester (Triglyceride) eingesetzt werden. Als geeignet sind pflanzliche und tierische Öle, Fette oder Fettsäuren zu nennen, wie z.B. Kokos-, Erdnuß-, Ricinus-, Oliven-, Sojabohnen-, Lein-, Baumwollsaatöl, Safloröl oder -ölfettsäuren, dehydratisiertes Rizinusöl bzw. -fettsäure, einfach ungesättigte Fettsäuren, Schmalz, Talg und Trane, Tallölfettsäure sowie synthetische Fettsäuren.

Die als Lösungsmittel für die vorgenannten Nitrocellulose-Derivate verwendeten Monomersysteme bestehen vorzugsweise aus (Meth)acrylaten der nachstehenden allgemeinen Formel

$$CH_2 = \overset{R^1}{\overset{|}{C}}-COOR^2$$

in der $R^1$ ein Wasserstoffatom oder eine Methylgruppe und $R^2$ ein Alkylrest mit 1 - 20, vorzugsweise 1 - 10 Kohlenstoffatomen, ein Cycloalkylrest mit 5 oder 6 Kohlenstoffatomen, einen Rest der Formel $-CH_2CH_2OCH_2CH_3$, $-C_6H_5$ oder $-CH_2C_6H_5$ bedeutet, enthalten.

Bis zu 30 Gew.-%, vorzugsweise 20 Gew.-% der (Meth)acrylate können durch wenigstens eines der folgenden Monomeren ersetzt werden: 1. Styrol und/oder substituierte Styrole der nachstehenden allgemeinen Formel:

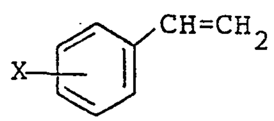

,

in der X ein Halogenatom (z.B. ein Chlor- oder Bromatom), eine Methyl-, Nitro- oder Aminogruppe oder $-N(Alkyl)_2$, wobei die Alkylreste jeweils 1 oder 2 Kohlenstoffatome aufweisen, ist. X in der vorstehenden allgemeinen Formel ist vorzugsweise eine Methylgruppe; vorzugsweise wird auch Styrol eingesetzt.

2. Vinylester wie Vinylacetat, Vinylpropionat und -butyrat. Bevorzugt wird Vinylacetat verwendet.

3. Vinylchlorid und Vinylidenchlorid;

4. Ein Monomer der nachstehenden allgemeinen Formel

$$CH_2 = \overset{R^1}{\overset{|}{C}}-COOR^3$$

in der $R^1$ die vorstehend angegebene Bedeutung hat und $R^3$ ein Wasserstoffatom oder eine 2-Sulfoethylgruppe bedeutet, oder

5. der nachstehenden allgemeinen Formel

$$CH_2 = \overset{R^1}{\overset{|}{C}}-COR^4$$

in der $R^1$ die vorstehend angegebene Bedeutung hat und $R^4$ eine Aminogruppe, $NHCH_2OH$ oder $NHCH_2O$-Alkyl (wobei der Alkylrest 1 - 4 Kohlenstoffatome aufweist), $-OCH_2CH_2OH$ oder $-OCH_2CH-(OH)CH_3$ darstellt, enthalten. Außerdem können Acrylnitril oder Methacrylnitril zugegen sein.

Es ist häufig zweckmäßig, dem (den) Monomeren einen Inhibitor einzuverleiben, um eine vorzeitige Polymerisation des (der) Monomeren während der Emulgierstufe zu verhindern. Typische Beispiele für Inhibitoren sind Hydrochinon, Hydrochinonmonomethylester (p-Methoxyphenol), tert.-Butylbrenzkatechin und 2,4-Di-tert.-butyl-6-methylphenol. Der Anteil des Inhibitors beträgt im allgemeinen 0,01 - 0,1 Gew.-%, bezogen auf das Monomere.

Wichtig ist, daß sich der Celluloseester im Monomersystem oder in einem mit Weichmachern und/oder nicht-monomeren Lösungsmitteln modifizierten Monomersystem in

einem bestimmten Ausmaß löst. Die Anzahl der gleichzeitig eingesetzten Monomeren und fakultativen Modifizier- bzw. Hilfsmittel ist lediglich durch praktische Erwägungen begrenzt. Die praktisch angewendete Polymerkonzentration hängt vom Molekulargewicht des Celluloseesters, von den Celluloseester/Lösungsmittel-Wechselwirkungen und der entsprechenden Feststoffanteil/Viskosität/Temperatur-Beziehung ab.

Für das erfindungsgemäße Verfahren geeignete oberflächenaktive Mittel (Tenside) für wäßrige Medien sind in

"Emulsions: Theory and Practice", Paul Becker, Kapitel 6,
Reinhold Publishing Corp., New York (1965) und
in Mc Cutcheon's
"Detergents and Emulsifiers, 1972 Annual"

beschrieben. Beispiele für diese Tenside sind anionenaktive Substanzen, die Carboxylate, z.B. Fettsäureseifen (abgeleitet von Laurin-, Stearin- oder Ölsäure) und Acylderivate von Sarcosin (Methylglycin), Sulfate, z.B. Natriumlaurylsulfat, sulfatierte natürliche Öle und Ester (Türkisch-Rot-Öl) und Alkylarylpolyethersulfate, Sulfonate, z.B. Alkylarylpolyethersulfonate, Dodecylbenzolsulfonat, Isopropylnaphthalinsulfonate und Sulfosuccinate sowie Sulfosuccinamate, Phosphorsäureester, z.B. langkettige Fettalkoholteilester komplexer Phosphate und Orthophosphorsäureester von polyethoxylierten Fettalkoholen.

Die vorgenannten anionaktiven Substanzen können in Form der Natrium-, Kalium-, Lithium-, Ammonium- oder Aminsalze vorliegen; am gebräuchlichsten sind die Natrium- und Ammoniumsalze.

Beispiele für kationaktive Substanzen sind N-(Laurylcolaminformylmethyl)-pyridiniumchlorid, Lauryldimethylbenzylammoniumchlorid sowie andere Aminsäure und quaternäre Ammoniumverbindungen.

Ein Beispiel für eine amphotere Substanz ist Laurylammoniumsulfonsäurebetain.

Beispiele für nicht-ionogene Substanzen sind ethoxylierte ein- und mehrwertige Alkohole (d.h. die Ethylenoxidderivate dieser Alkohole), wie z.B. Octyl- und Nonylphenolderivate, Ethylenoxid/Propylenoxid-Blockcopolymere Ester (z.B. Glycerylmonostearat), Dehydratisierungsprodukte von Sorbit z.B. Sorbitanmonostearat und Polyethylenoxidsorbitanmonolaurat sowie Laurinsäureisopropanolamid.

Am häufigsten verwendet werden anionaktive und/oder nichtionogene Substanzen.

Ebenfalls einsetzbar (entweder allein oder im Kombination mit den vorstehend beschriebenen oberflächenaktiven Substanzen) sind Kolloide und hochmolekulare Stabilisatoren, wie komplexe Polysaccharide (Gummi Arabicum und Traganth), Amylopectin, wasserlösliche Cellulosederivate (z.B. Natriumcarboxymethylcellulose, Hydroxyethyl- und Hydroxypropylcellulose), Polyvinylalkohol (z.B. in teilweise verseifter Form), Alginate und Carrageenin.

Mit der Wahl der richtigen oberflächenaktiven Mittel und Stabilisatoren befaßt sich ein umfangreiches Schrifttum einschließlich der vorgenannten Literaturstelle. Häufig ist man auf das Experiment angewiesen. Typische Anteile liegen im Bereich von etwa 0,1 bis 10 Gew.-%.

Zur Erzielung eines klaren und hochglänzenden Films kann man auch ein oder mehrere Koaleszier- oder Verwachsungsmittel der Dispersion zusetzen. Bevorzugt sind hier Koalesziermittel, die mit dem Wasser ein Azeotrop bilden. Man muß dann der Dispersion so viel Koalesziermittel zusetzen, daß zunächst das Azeotrop abdestilliert und darüber hinaus noch Koalesziermittel, das die Verwachsung der Teilchen durchführt, erhalten bleibt. Als solche kommen in Frage Glykole, wie Ethylen- und Propylenglykol, Butandiol und 2-Methylpentan-2,4-diol-diethylenglykol, Glykolether, wie Methoxyethylenglykol, Ethoxyethylenglykol, n-Butylethylenglykol, Diethylenglykolmethylether, Diethylenglykolethylether und Diethylenglykol-n-butylether sowie Glykoletheracetate, wie Methoxyethylenglykolacetat, Ethoxyethylenglykolacetat, n-Butoxyethylenglykolacetat, Diethylenglykolethyletheracetat und Diethylenglykol-n-butyletheracetat.

Beispiele für Weichmacher sind Ester von aliphatischen ein- und zweibasischen Fettsäuren, wie Triacetin, Triethylenglykol-di-(2-ethylbutyrat), Triethylenglykol-di-(2-ethylhexoat), Polyethylenglykol-di-(2-ethylhexoat), Dibutyladipat und Di-(2-ethylhexyl)-adipat, Benzylbutyladipat, von aliphatischen Hydroxycarbonsäuren, wie Butylacetylricinoleat, Di-isobutyltartrat und Acetyltri-n-butylcitrat, von aromatischen Säuren, wie Dimethylphthalat, Diethylphthalat, Dibutylphthalat, Di-(2-ethylhexyl)-phthalat, Dibutoxyethylphthalat, Diphenylphthalat und Dipropylenglykoldibenzoat, von Derivaten von Phthalylglykolsäure, z.B. Methylphthalylmethylglykolat, Ethylphthalylethylglykolat und Butylphthalylglykolat, Phosphorsäureester, wie Tributylphosphat, Tributoxyethylphosphat, Tri-(2-ethylhexyl)-phosphat, Tritolylphosphat, Trikresylphosphat, Triphenylphosphat, 2-Ethylhexyldiphenylphosphat und Trioctylphosphat, ferner Sulfonamide, wie p-Toluolsulfonamid, gemischtes o- und p-Toluolsulfonamid, N-Ethyl-p-toluolsulfonamid und N-Cyclohexyl-p-toluolsulfonamid, chlorierte Biphenyle und andere chlorierte Kohlenwasserstoffe, wie chlorierte Diphenyle mit einem Chlorgehalt von 21 bzw. 42 bzw. 68 Gew.-% und einer Dichte (25°C) von 1,182 bis 1,192 bzw. 1,381 bis 1,392 bzw. 1,804 bis 1,811, chlorierte Triphenyle mit einem Chlorgehalt von 42 Gew.-% und einer Dichte (25°C von 1,470) sowie Polyester, wie Poly-1,3-butylenadipat und Polypropylenadipat. Weitere Weichmacher sind in H. Warson, "The Application of Synthetic Resin Emulsions" (1972), Ernest Benn Ltd., London, Tabelle III. 5, beschrieben.

Verfahren zur Herstellung der wäßrigen Emulsion sind in Kapitel 7 des vorgenannten Buches von Becker (loc. cit.) beschrieben. Zu diesem Methoden gehören die Vorlösung des

Polymeren im Monomeren, die Lösung des Polymeren im Monomeren durch einfaches Verrühren im Gefäß mit einem Paddelrührer, die Düsenmischmethode, die Ultraschallmischmethode und das Mischen mit Turbinenrührern, Homogenisiervorrichtungen, Kolloidmühlen, Kady Mills (Kinetic Dispersion Corporation, Buffalo, New York) und anderen Schervorrichtungen, sowie die Kombinationen dieser Methoden. Als bevorzugte Homogenisierungsvorrichtungen seien Ultra Turrax Typ 45 mit 10 000 U/Min., Dissolver mit 18 300 U/Min. und Perlmühle genannt.

Die bei der Emulsion angewendeten Temperatur- und Druckbedingungen werden durch den Dampfdruck des jeweiligen Lösungsmittelsystems bestimmt. Die für die Emulgierung aufgewendete Zeit kann einige Minuten bis mehrere Stunden betragen; Emulgierzeiten von 2 - 60 Min. werden bevorzugt. Die Temperatur kann im Bereich von unterhalb 25°C bis 150°C liegen; bevorzugt wird der Bereich von 25°C bis 100°C.

Aus der Emulsion wird dann durch radikalische Polymerisation die wäßrige Dispersion, bei der ein im wesentlichen homogenes Gemisch von Polymeren innerhalb der dispergierten Teilchen vorliegt, hergestellt. Die Polymerisation findet vorzugsweise in einem anderen Gefäß als dem zur Erzeugung der Emulsion verwendeten statt. Auf diese Weise läßt sich die exotherme Reaktion besser unter Kontrolle halten. Je nach den Bestandteilen des Ansatzes läßt sich die Polymerisation unter Normaldruck oder erhöhtem Druck vornehmen. Der Reaktor kann entweder kontinuierlich oder diskontinuierlich arbeiten. Man kann auch ein Kaskaden-Polymerisationssystem anwenden. Die Polymerisationsreaktion erfordert einen radikalbildenden Initiator, der entweder als solcher zugesetzt oder - bei kontinuierlicher Polymerisation - kontinuierlich in Wasser oder einem geeigneten organischen Lösungsmittel eingespeist werden kann. Die Polymerisationstemperatur liegt im Bereich von 0 bis 200°C, vorzugsweise von 25°C bis etwa 140°C, insbesondere von 25°C bis 90°C. Die Polymerisationsdauer kann einige Minuten bis mehrere Stunden betragen und liegt in der Regel im Bereich von etwa 30 Min. bis etwa 6 Std.

Dabei ist es für die Eigenschaften der Polymeremulsion unerheblich, ob der Alkydharzanteil vor, während oder nach der radikalischen Polymerisation zugegeben wird.

Als radikalbildende Initiatoren eignen sich wasserlösliche und öllösliche Verbindungen. Beispiele für geeignete wasserlösliche Verbindungen sind Natrium-, Kalium- und Ammoniumpersulfat und Wasserstoffperoxid (mit oder ohne Reduktionsmittel, wie Eisensalze, Natriumsulfit, -thiosulfat, -metabisulfit und Zink- oder Natriumformaldehydsulfoxylat). Beispiele für verwendbare öllösliche Verbindungen sind Azoverbindungen, wie Azoisobutyronitril und Azobis-(dimethylvalero)-nitril sowie Peroxide und Hydroxyperoxide, wie Benzoylperoxid, Lauroylperoxid oder Di-tert.-butylhydroperoxid (mit oder ohne Aminbeschleuniger, wie p-Toluidin, oder Reduktionsmittel des bei den wasserlöslichen Initiatoren beschriebenen Typs). Typische Initiatoranteile liegen im Bereich von 0,01 bis

2 Gew.-% (vorzugsweise 0,1 - 1 Gew.-%), bezogen auf das polymerisierbare Monomere. Bei der Polymerisation können auch herkömmliche Kettenüberträger, Hilfstenside und Schutzkolloide zugegen sein.

Die Viskosität der wäßrigen Polymeridispersion soll vorzugsweise im Bereich von 5 bis oberhalb 10 000 mPa.s. liegen. Der Feststoffanteil der Dispersion sollte 20 - 60 Gew.-%, vorzugsweise 20 - 50 Gew.-% betragen. Die Durchschnittsgröße der Teilchen in der Dispersion sollte im Bereich von 0,01 - 5µm liegen.

Die wäßrigen Polymerdispersionen eignen sich zur Erzeugung von Schutz- und Dekorüberzügen sowie als Kleber für Metall- und Kunststoffsubstraten. Mit Hilfe der erfindungsgemäßen Dispersionen können Holzsubstrate, wie Möbel und Vitrinen, sowie flexible Substrate, wie Folien und Textilgut, mit klaren, thermoplastischen Überzügen versehen werden, wobei der Zusatz des fettsäuremodifizierten Harzes den entscheidenden Vorteil in der Oberflächenhärte gegenüber den bekannten Dispersionen bringt.

Die aus den erfindungsgemäßen Dispersionen herstellbaren Überzüge zeichnen sich durch Glanz, hohe Filmhärte neben ausgezeichneter Flexibilität und guter Beständigkeit gegen Alkohol und Wasser aus. Zur Erzielung von Lösungsmittelresistenz und Unangreifbarkeit gegen Lauge oder alkalische Agenzien ist es manchmal erforderlich, eine Filmvernetzung herbeizuführen. Hierzu werden im allgemeinen Aminoplastharze eingesetzt.

Als Aminoplastharze sind beispielsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 - 4 C-Atomen veretherten Melamin-Formaldehyd-Kondensate, wie sie z.B. in der französischen Patentschrift 943 411 oder bei d.H. Solomon, The Chemistry of Organic Filmformers, 235 bis 240, John Wiley & Sons, Inc., New York, 1967, beschrieben sind. Die Melaminharze können jedoch auch ganz oder teilweise durch andere vernetztende Aminoplaste, wie sie z.B. in "Methoden der organischen Chemie" (Houben-Weyl), Band 14/2, Teil 2, 4. Auflage, Georg Thieme Verlag, Stuttgart, 1963, 319 ff, beschrieben sind, ersetzt werden.

Bezogen auf Bindemittel können die Aminoplastharze in Mengen von 10 - 50 Gew.-% eingesetzt werden.

In den nachstehenden Beispielen beziehen sich die Prozentangaben auf das Gewicht:

Beispiel 1

564,6 Teile Nitrocellulose (ca. 12 % Stickstoff Norm 24 E nach DIN 53 179) bestehend aus 82 % Collodiumwolle und 18 % Dibutylphthalat, 246,9 g Butylacrylat, 246,9 g n-Butylmethacrylat, 87,9 g eines Erdnußöl-Fettsäure-Alkydharzes mit einem Ölgehalt von 41 % (80 %ig in Ethylacetat), 100,5 g Butylacetat und 100,5 g Butylglykolacetat werden in einem 5-kg-Weißblecheimer zusammengegeben und bei Raumtemperatur gemischt bis die Nitrocellulose in Lösung gegangen ist.

Nach Zugabe von 1545,9 g Wasser, 26,8 g ethoxylierter Phosphorsäure, 51,6 g Dodecylbenzolsulfonat und 21,6 g Natriumhydrogencarbonat wird das Reaktionsgemisch unter dem Dissolver (Firma Pendraulik, Typ LD 50) bei 8400 U/Min. homogenisiert.

Die homogene Mischung wird in eine Glaspolymerisationsapparatur (Tropftrichter, Rührer, automatische Heiz/Kühleinrichtung) eingefüllt, auf 70°C aufgeheizt und unter Zugabe von 7,8 g Kaliumpersulfat in ca. 150 ml Wasser über einen Zeitraum von ca. 15 - 20 Min. radikalisch polymerisiert. Das Reaktionsgemisch wird noch weitere 1 1/2 - 2 Stunden bei 70°C gehalten und ergibt danach eine Polymeremulsion mit einem Festgehalt von 27,2 Gew.-%, einer Viskosität von 1540 mPa.s., einem pH-Wert von 8,2 und einer Dichte von 1,051 g/cm³.

Beispiel 2

Die Polymeremulsion wurde analog Beispiel 1 hergestellt mit dem Unterschied, daß der Alkydharzanteil erst nach der radikalischen Polymerisation zugegeben wurde. Es resultiert eine Polymeremulsion mit einem Festgehalt von 32,1 Gew.-%, einem pH-Wert von 8,0 und einer wegen Eindickung nicht meßbaren Viskosität.

Beispiel 3

564,6 Teile Nitrocellulose (ca. 12 % Stickstoff Norm 24 E nach DIN 53 179) bestehend aus 65 % Collodiumwolle und 35 % Wasser, 246,9 g Butylacrylat, 246,9 g n-Butylmethacrylat, 87,9 g Erdnußöl-Fettsäure-Alkydharz mit einem Ölgehalt von 41 % (80 %ig in Ethylacetat), 150,5 g Butylacetat und 150,5 g Butylglykolacetat werden in einem 5-kg-Weißblecheimer zusammengegeben und bei Raumtemperatur gemischt bis die Nitrocellulose in Lösung gegangen ist.

Nach Zugabe von 1445,9 g Wasser, 25,8 g ethoxylierter Phosphorsäure, 51,6 g Dodecylbenzolsulfonat und 21,6 g Natriumhydrogencarbonat wird das Reaktionsgemisch unter dem Dissolver bei 8400 U/Min. homogenisiert.

Das homogene Gemisch wird wie in Beispiel 1 der radikalischen Polymerisation unter Zugabe von 7,8 g Kaliumpersulfat in 150 ml Wasser unterworfen. Die resultierende Polymeremulsion hat einen Feststoffgehalt von 29,0 Gew.-%,

einen pH-Wert von 7,8 und eine wegen Eindickung nicht meßbare Viskosität.

Beispiel 4

522,6 Teile Nitrocellulose (ca. 12 % Stickstoff Norm 24 E nach DIN 53 179) bestehend aus 82 % Collodiumwolle und 18 % Dibutylphthalat, 222,9 Teile Butylacrylat, 222,9 Teile n-Butylmethacrylat, 177,9 Teile eines Erdnußöl-Fettsäure-Alkydharzes mit einem Ölgehalt von 41 % (80 %ig in Ethylacetat), 100,5 Teile Butylacetat und 100,5 Teile Butylglykolacetat werden in einem 5-kg-Weißblecheimer zusammengegeben und bei Raumtemperatur gemischt bis die Nitrocellulose in Lösung gegangen ist.

Nach Zugabe von 1545,9 Teile Wasser, 25,8 Teile ethoxylierter Phosphorsäure, 51,6 Teile Dodecylbenzolsulfonat und 21,6 Teile Natriumhydrogencarbonat wird das Reaktionsgemisch unter dem Dissolver bei 8400 U/Min. homogenisiert.

Das homogene Gemisch wird in einer Glaspolymerisationsapparatur analog Beispiel 1 polymerisiert. Die resultierende Polymeremulsion hat einen Feststoffanteil von 28,8 %, eine Viskosität von 4116 mPa.s und einen pH-Wert von 8,03.

Beispiel 5

Die Polymeremulsion wurde analog Beispiel 4 hergestellt

mit dem Unterschied, daß der Alkydharzanteil erst nach der radikalischen Polymerisation zugegeben wurde. Es resultiert eine Polymeremulsion mit einem Festgehalt von 31,6 %, einer Viskosität von 4202 mPa.s, einer Dichte von 1,045 g/cm³ und einem pH-Wert von 7,95.

Beispiel 6

522,6 Teile Nitrocellulose (ca. 12 % Stickstoff Norm 24 E nach DIN 53 179) bestehend aus 65 % Collodiumwolle und 35 % Wasser, 222,9 Teile Butylacrylat, 222,9 Teile n-Butylmethacrylat, 177,9 Teile eines Erdnußöl-Fettsäure-Alkydharzes mit einem Ölgehalt von 41 % (80 %ig in Ethylacetat), 100,5 Teile Butylacetat und 100,5 Teile Butylglykolacetat werden in einem 5-kg-Weißblecheimer zusammengegeben und bei Raumtemperatur gemischt bis die Nitrocellulose in Lösung gegangen ist.

Nach Zugabe von 1545,9 Teilen Wasser, 25,8 Teilen ethoxylierter Phosphorsäure, 51,5 Teile Dodecylsulfonsulfonat und 21,6 Teile Natriumhydrogencarbonat wird das Reaktionsgemisch unter dem Dissolver bei 8400 U/Min. homogenisiert.

Die homogene Mischung wird analog Beispiel 1 in einer Glaspolymerisationsapparatur der radikalischen Polymerisation bei 70°C unterworfen. Die resultierende Polymeremulsion hat einen Festgehalt von 27,9 %, eine Viskosität von 136 mPa.s, eine Dichte von 1,094 g/cm³ und einen pH-Wert von 8,2.

Beispiel 7

Die Polymeremulsion wurde analog Beispiel 6 hergestellt mit dem Unterschied, daß der Alkydharzanteil erst nach der radikalischen Polymerisation zugegeben wurde. Es resultiert eine Polymeremulsion mit einem Festgehalt von 31,9 %, einer Viskosität von 1021 mPa.s, einer Dichte von 1,035 g/cm³ und einem pH-Wert von 7,2.

Beispiel 8

564,6 Teile Nitrocellulose (12 % Stickstoff Norm 32 E nach DIN 53 179) bestehend aus 82 % Collodiumwolle und 18 % Dibutylphthalat, 246,9 Teile Butylacrylat, 246,9 Teile n-Butylmethacrylat, 87,9 Teile eines Erdnußöl-Fettsäure-Alkydharzes mit einem Ölgehalt von 41 % (80 %ig in Ethylacetat), 100,5 Teile Butylacetat und 100,5 Teile Butylglykolacetat werden in einem 5-kg-Weißblecheimer zusammengegeben und bei Raumtemperatur gemischt bis die Nitrocellulose in Lösung gegangen ist.

Nach Zugabe von 1545,9 Teile Wasser, 25,8 Teile ethoxylierter Phosphorsäure, 51,6 Teile Dodecylbenzolsulfonat und 21,6 Teile Natriumhydrogencarbonat wird das Reaktionsgemisch unter dem Dissolver bei 8400 U/Min. homogenisiert. Das homogene Gemisch wird analog Beispiel 1 radikalisch polymerisiert. Die resultierende Polymeremulsion hat einen Feststoffgehalt von 27,9, einen pH-Wert von 7,8 und eine infolge Eindickung nicht meßbare Viskosität.

Vergleichsbeispiel 1

536,6 Teile Nitrocellulose (ca. 12 % Stickstoff Norm 24 E nach DIN 53 179) bestehend aus 65 % Collodiumwolle und 35 % Wasser, 296,2 Teile Butylacrylat, 296,2 Teile n-Butylmethacrylat, 109,2 Teile Butylacetat und 109,2 Teile Butylglykolacetat werden in einem 5-kg-Weißblecheimer zusammengegeben und bei 25°C gemischt bis die Nitrocellulose in Lösung gegangen ist.

Nach Zugabe von 1546 Teilen Wasser, 25,8 Teilen ethoxylierter Phosphorsäure, 51,5 Teilen Dodecylbenzolsulfonat und 51,5 Teilen Natriumhydrogencarbonat wird das Reaktionsgemisch unter dem Dissolver bei 8400 U/Min. homogenisiert.

Das homogene Gemisch wird analog Beispiel 1 polymerisiert. Die resultierende Polymeremulsion hat einen Feststoffanteil von 33,4 %, eine Dichte von 1,052 g/cm³, einem pH-Wert von 7,8 und einer Viskosität von 21 mPa.s.

Vergleichsbeispiel 2

Bei diesem Vergleichsbeispiel handelt es sich um das Beispiel 2 der DOS 2 703 075.

Herstellen von Klarlacken

Die in den Beispielen 1 - 8 und Vergleichsbeispielen 1 - 2 hergestellten Polymeremulsionen wurden zu Lacken

verarbeitet, indem sie mit einem Lösergemisch, bestehend aus Butylacetat/Butylglykolacetat 1:1, auf eine Auslaufviskosität (DIN 4-mm-Becher) von 30 s nach DIN 53 211 eingestellt wurden.

Die gefundenen anwendungstechnischen Prüfdaten sind in der nachfolgenden Tabelle zusammengestellt:

Tabelle

| Prüfergebnisse für Lacke auf Basis der beschriebenen Dispersionen | Beispiele 1 | 2 | 3 | 4 | 5 | 6 | 7 | 8 | Vergleichsbeisp. 1 | 2 |
|---|---|---|---|---|---|---|---|---|---|---|
| Trocknung bis zur Klebfreiheit (Min.) bei Zimmertemperatur | 180 | 180 | 180 | 180 | 60 | 45 | 50 | 50 | 60 | 35 |
| Pendelhärte nach DIN 53 157 nach (sec.) 1 Std. | 113 | 48 | 62 | 46 | 22 | 91 | 48 | 42 | 34 | 30 |
| 24 Std. | 136 | 113 | 183 | 161 | 130 | 154 | 143 | 85 | 90 | 114 |
| Trübung des Lackfilms[1)] | 0 | 0 | 0 | 0 | 0 | 0 | 0 | 0 | 2-3 | 1 |
| Vergilbung des Lackfilms[1)] | 0 | 0 | 0 | 0 | 0 | 0 | 0 | 0 | 1 | 0 |
| Wasserfestigkeit[1,2)] | 2 | 0 | 2 | 0 | 0 | 0 | 0 | 0 | 0 | 1 |
| Alkoholfestigkeit[1,3)] | 0 | 0 | 0 | 0 | 0 | 0 | 0 | 0 | 3 | 4 |
| Standzeit (in Std.) | unbegrenzt | | | | | | | | | |

1) allgemeine Bewertungsskala: 0 = ausgezeichnet, 1 = sehr gut, 2 = gut, 3 = befriedigend, 4 = ungenügend, 5 = sehr schlecht.

2) Prüfung erfolgt nach einwöchiger Lagerung der Prüfplatte bei 20°C durch Belastung mit wassergetränktem Wattebausch. Dauer der Belastung 8 Std.

3) Entsprechend 2, statt Wasser 50 %ige wäßrige Ethylalkohol-Lösung.

Patentansprüche:

1. Wäßrige Polymerdispersionen enthaltend

a) 5 - 40 Gew.-% Poly(meth)acrylat und/oder Copolymerisation des Poly(meth)acrylates,
b) 5 - 40 Gew.-% Celluloseestern,
c) 0 - 25 Gew.-% Weichmacher,
d) 0,5 - 10 Gew.-% Emulgator,

dadurch gekennzeichnet, daß die Polymerdispersion

e) 0,5 - 30 Gew.-% fettsäuremodifizierte Harze

enthält,
und der Feststoffanteil der Polymerdispersion 20 - 60 Gew.-%, bezogen auf die Gesamtdispersion beträgt.

2. Wäßrige Polymerdispersion nach Anspruch 1, enthaltend

10 - 25 Gew.-% der Komponente a)
5 - 25 Gew.-% der Komponente b)
0 - 15 Gew.-% der Komponente c) und
1 - 5 Gew.-% der Komponente d).

3. Wäßrige Polymerdispersion nach Ansprüchen 1 und 2, enthaltend 1,0 - 10 Gew.-% der Komponente e).

4. Wäßrige Polymerdispersion nach Ansprüchen 1 bis 3, dadurch gekennzeichnet, daß der Feststoffanteil 20 - 50 Gew.-% beträgt.

5. Wäßrige Polymerdispersion nach Ansprüchen 1 bis 4, enthaltend 10 - 50 Gew.-%, bezogen auf den Feststoffanteil der Polymerdispersion, Aminoplastharze.

6. Wäßrige Polymerdispersion nach Ansprüchen 1 bis 5, dadurch gekennzeichnet, daß die Durchschnittsgröße der dispergierten Teilchen im Bereich von 0,01 - 5 µm liegt.

7. Wäßrige Polymerdispersion nach Anspruch 6, dadurch gekennzeichnet, daß die Teilchengröße im Bereich von 0,01 - 1,5 µm liegt.

8. Wäßrige Polymerdispersion nach Ansprüchen 1 - 7, dadurch gekennzeichnet, daß als fettsäuremodifizierte Harze Öl- oder fettsäuremodifizierte Alkydharze verwendet werden.

9. Verfahren zur Herstellung der wäßrigen Polymerdispersionen nach Ansprüchen 1 bis 8, dadurch gekennzeichnet, daß man den Celluloseestern in (Meth)acrylaten und gegebenenfalls weiteren $\alpha,\beta$-ungesättigten Monomeren und Lösungsmittel löst, nach Zugabe von Emulgatoren und gegebenenfalls Weichmachern emulgiert und solchen Bedingungen unterwirft, daß der Monomeranteil in dem emulgierten Teilchen radikalisch polymerisiert, dadurch gekennzeichnet, daß das fettsäuremodifizierte Harz vor, während oder nach der radikalischen Polymerisation zugesetzt wird.